# EUROPÄISCHE PATENTSCHRIFT

(11) **EP 1 073 293 B1**
(45) Veröffentlichungstag und Bekanntmachung des Hinweises auf die Patenterteilung: **04.12.2002**
(21) Anmeldenummer: 00890050.8
(22) Anmeldetag: 21.02.2000
(51) Int. Cl.: H04Q 7/22, G06F 1/00

(54) **Vorrichtung und Computerprogramm zum automatischen Generieren und Versenden von SMS-Nachrichten**
Device and computer program for automatic generation and transmission of SMS-messages
Dispositif et programme d'ordinateur pour générer et transmettre automatiquement des messages SMS

(43) Veröffentlichungstag der Anmeldung: 31.01.2001
(73) Patentinhaber: Mobilkom Austria Aktiengesellschaft & Co KG, 1020 Wien (AT)
(72) Erfinder: Peter, Bernd, 1150 Wien (AT); Huber, Alexander, Dr., 1150 Wien (AT)
(74) Vertreter: Weiser, Andreas, Dipl.-Ing.

(56) Entgegenhaltungen:
- EP-A- 0 797 368
- EP-A- 0 844 551
- EP-A- 0 851 696
- WO-A-97/41654
- WO-A-98/59506
- WO-A-99/16268
- US-A- 5 852 775

## Beschreibung

Die vorliegende Erfindung betrifft eine Vorrichtung zum automatischen Generieren und Versenden von SMS-Nachrichten an Mobiltelephone, die in einem Mobiltelephonnetz jeweils durch ihre Mobiltelephonadresse identifiziert sind, wobei das Mobiltelephonnetz eine SMS-Dienstzentrale aufweist, und wobei den Mobiltelephonadressen Konten in einer Verrechnungsanlage zugeordnet sind, mit
einer ersten Datenbank, die einen Vorrat an versendbaren SMS-Nachrichten bereitstellt,
einer zweiten Datenbank, welche SMS-Akzeptanzprofile für jeweils zugeordnete Mobiltelephonadressen aufnimmt und über einen Fernzugang speisbar ist, und
einem Taskplaner, der unter Steuerung eines Zeitgebers und/oder Zufallsgenerators die SMS-Akzeptanzprofile in der zweiten Datenbank abarbeitet und den SMS-Akzeptanzprofilen entsprechende SMS-Nachrichten aus der ersten Datenbank ausliest und jede ausgelesene SMS-Nachricht zusammen mit der im jeweiligen SMS-Akzeptanzprofil angegebenen Mobiltelephonadresse an die SMS-Dienstzentrale sendet.

Die automatische Generierung und Versendung von SMS-Nachrichten (Short Message Service-Nachrichten) in Mobiltelephonnetzen kann dazu verwendet werden, Werbebotschaften, Tagesnachrichten, Börseninformationen usw. an Abonnenten, Kunden oder potentielle Kunden zu senden. In Mobiltelephonnetzen nach dem GSM-Standard sind die technischen Grundlagen und Normen für das Versenden von SMS-Nachrichten in den ETSI-Spezifikationen Nr. ETS 300 536 (GSM 03.40: Point-to-Point-Protocol) und ETS 300 537 (GSM 03.41: Cell Broadcast SMS) definiert.

Das automatische Generieren und Versenden von SMS-Nachrichten an potentielle Kunden, d.h. unaufgefordert, stellt in der Praxis ein Akzeptanzproblem dar. In einzelnen Jurisdiktionen kann dies auch unzulässig sein. Aus der WO 99/16268 ist eine Lösung des Akzeptanzproblemes im Zusammenhang mit dem Empfang von unerwünschten Paketdaten in einem GSM-Netz bekannt. Bei dem bekannten System wird den zu verteilenden Paketdaten eine SMS-Nachricht vorausgeschickt, welche den Empfänger vorab über den Sender der Paketdaten informiert, so daß dem Benutzer die Wahlmöglichkeit zum Empfangen oder Ablehnen des anschließenden Datenpaketes bleibt. Dieses System ist nicht anwendbar, wenn die zu akzeptierende Nachricht in der SMS-Nachricht selbst liegt.

Eine weitere Lösung des Akzeptanzproblems ist aus der WO 97/41654 bekannt, welche eine Vorrichtung gemäß dem Oberbegriff des Anspruches 1 sowie ein Computerprogramm gemäß dem Oberbegriff des Anspruches 8, d.h. der oben genannten einleitenden Art, offenbart.

Auch wenn mit der bekannten Vorrichtung die Benutzerakzeptanz gesteigert werden kann, ist ihre Wirksamkeit in der Praxis gering, d.h. es werden nur wenige Akzeptanzprofile angelegt und SMS-Nachrichten versendet.

Die Erfindung setzt sich daher zum Ziel, eine Vorrichtung und ein Computerprogramm der eingangs genannten Art zu schaffen, mit welchen eine höhere Versenderate von SMS-Nachrichten erzielt werden kann.

Dieses Ziel wird in einem ersten Aspekt mit einer Vorrichtung der einleitend genannten Art erreicht, die sich erfindungsgemäß dadurch auszeichnet,
daß den SMS-Nachrichten in der ersten Datenbank jeweils Kontoinkremente zugeordnet sind, und
daß der Taskplaner das einer ausgelesenen SMS-Nachricht zugeordnete Kontoinkrement zusammen mit der genannten Mobiltelephonadresse an die Verrechnungsanlage sendet.

Auf diese Weise wird das Konto jedes Benutzer für jede versandte bzw. empfangene SMS-Nachricht inkrementiert. Die Vorrichtung ermöglicht damit eine individuelle Zuordnung jedes Kontoinkrementes zu der jeweiligen SMS-Nachricht, wodurch die Werbewirkung und Akzeptanz wesentlich besser steuerbar ist als mit den bekannten Vorrichtungen.

An dieser Stelle sei erwähnt, daß es z.B. aus der US-A-5 852 775 an sich bereits bekannt ist, den Empfänger einer Werbenachricht in einem Mobiltelephonnetz für den Empfang zu entlohnen. Bei den Werbenachrichten der US-A-5 852 775 handelt es sich um gespeicherte Audio-Nachrichten; die dort offenbarte Vorrichtung akkumuliert lediglich die Anzahl der ausgestrahlten Audio-Nachrichten und berücksichtigt die Summe bei der Abrechnung des Benutzerkontos. Eine individuelle Zuordnung einzelner Kontoinkremente zu einzelnen Nachrichten ist mit dieser Vorrichtung nicht möglich.

Das Kontoinkrement kann bei der Erfindung in einer Bargeld-, Kreditkarten, Kundenkonto- oder Telephongesprächszeitgutschrift od. dgl. bestehen.

Der Fernzugang kann auf beliebige Weise gestaltet sein. Bevorzugt ist jedoch der Fernzugang ein Internetzugang, was für den Benutzer ausgezeichnete Verfügbarkeit und Übersichtlichkeit gewährleistet.

Eine bevorzugte Ausführungsform der Erfindung zeichnet sich aus durch eine dritte Datenbank, in welcher SMS-Autorisierungsprofile für jeweils zugeordnete Mobiltelephonadressen gespeichert sind, wobei der die zweite Datenbank speisende Fernzugang mit einer Überprüfungsstufe in Verbindung steht, welche ein eingespeistes SMS-Akzeptanzprofil anhand des - über die jeweilige Mobiltelephonadresse referenzierten - SMS-Autorisierungsprofiles auf Autorisierung überprüft. Dadurch kann ein Mißbrauch des Systems verhindert werden: Nur SMS-Akzeptanzprofile, die an Hand eines für den jeweiligen Nutzer vorgegebenen SMS-Autorisierungsprofiles plausibel erscheinen, sind in die zweite Datenbank einspeisbar.

Gemäß einem bevorzugten Merkmal der Erfindung werden die SMS-Autorisierungsprofile aus einer Kundenprofil-Datenbank des Mobiltelephonnetzes abgeleitet. Beispielsweise können aus einer statistischen Auswertung der von oder zu einer bestimmten Mobiltelephonadresse geführten Gesprächsverbindungen Kundenprofile anfallen, die Aussagen über den Lebensraum und die finanzielle Situation eines Mobiltelephonbenützers enthalten und in einer Kundenprofil-Datenbank des Mobiltelephonnetzes zur Verfügung stehen. Die Erfindung benützt hier in rationeller Weise die bestehenden Kundenprofile zur Generierung von SMS-Autorisierungsprofilen.

Eine weitere vorteilhafte Ausführungsform der Erfindung besteht darin, daß der Taskplaner an ein Ortsregister des Mobiltelephonnetzes angeschlossen ist, welches aktualisierte Ortsdaten der im Netz gerade angemeldeten Mobiltelephonadressen enthält, und die SMS-Nachrichten auch anhand dieser Ortsdaten ausliest. Auf diese Weise kann die Generierung und Versendung von SMS-Nachrichten auch auf den geographischen Zustand der adressierten Mobiltelephone Rücksicht nehmen, so daß beispielsweise bevorzugt Werbe-SMS von jenen Unternehmen generiert und versandt werden, die sich in geographischer Nähe zu dem adressierten Mobiltelephon befinden.

Besonders günstig ist es ferner, wenn auch die erste Datenbank über einen Fernzugang, bevorzugt einen Internetzugang, speisbar ist. Dadurch kann der Vorrat an versendbaren SMS-Nachrichten auf einfache Weise von den jeweiligen Autoren selbst, z.B. werbenden Unternehmen, eingespeist und gewartet werden.

In einem weiteren Aspekt schafft die Erfindung ein Verfahren zum selektiven Freigeben des einspeisenden Internetzuganges zur zweiten Datenbank, das sich auszeichnet durch die Schritte:
a) Empfangen einer Mobiltelephonadresse über das Internet und Speichern derselben,
b) Erzeugen und Speichern eines der Mobiltelephonadresse zugeordneten Paßwortes und Senden desselben, zusammen mit der Mobiltelephonadresse, an eine SMS-Dienstzentrale eines Mobiltelephonnetzes,
c) Empfangen eines Paßwortes über das Internet,
d) Vergleichen des gesendeten Paßwortes mit dem empfangenen Paßwort und Freigeben des einspeisenden Internetzuganges im Falle der Übereinstimmung.

Auf diese Weise wird ein besonders sicheres Login-Verfahren zur zweiten Datenbank geschaffen: Das Paßwort wird über das Mobiltelephonnetz an die angegebene Mobiltelephonadresse gesandt und damit gerade an jene Adresse, an welche die SMS-Nachrichten gemäß dem eingespeicherten Akzeptanzprofil versandt werden sollen.

An dieser Stelle sei erwähnt, daß z.B. aus der EP 0 844 551 sichere Login-Verfahren bekannt sind, wonach ein zweiter Teil des Paßwortes über einen gesonderten Kommunikationskanal, z.B. eine Telephonleitung-Pagerverbindung, dem Benutzer mitgeteilt wird, so daß sich dieser über einen ersten Kommunikationskanal vollständig anmelden kann.

In einem letzten Aspekt schafft die Erfindung ein Computerprogramm, welches die geschilderte Vorrichtung per Software implementiert.

Weitere Merkmale und Vorteile der Erfindung ergeben sich aus der nachfolgenden Beschreibung eines bevorzugten Ausführungsbeispieles, welche unter Bezugnahme auf die begleitenden Zeichnungen gegeben wird, in denen:
Fig. 1 ein Blockschaltbild der erfindungsgemäßen Vorrichtung zeigt, das gleichzeitig ein Objektdiagramm des erfindungsgemäßen Computerprogrammes darstellt;
Fig. 2 ein Flußdiagramm des erfindungsgemäßen Login-Verfahrens zeigt; und
Fig. 3 eine Bildschirmmaske zur Bearbeitung des Akzeptanzprofiles darstellt.

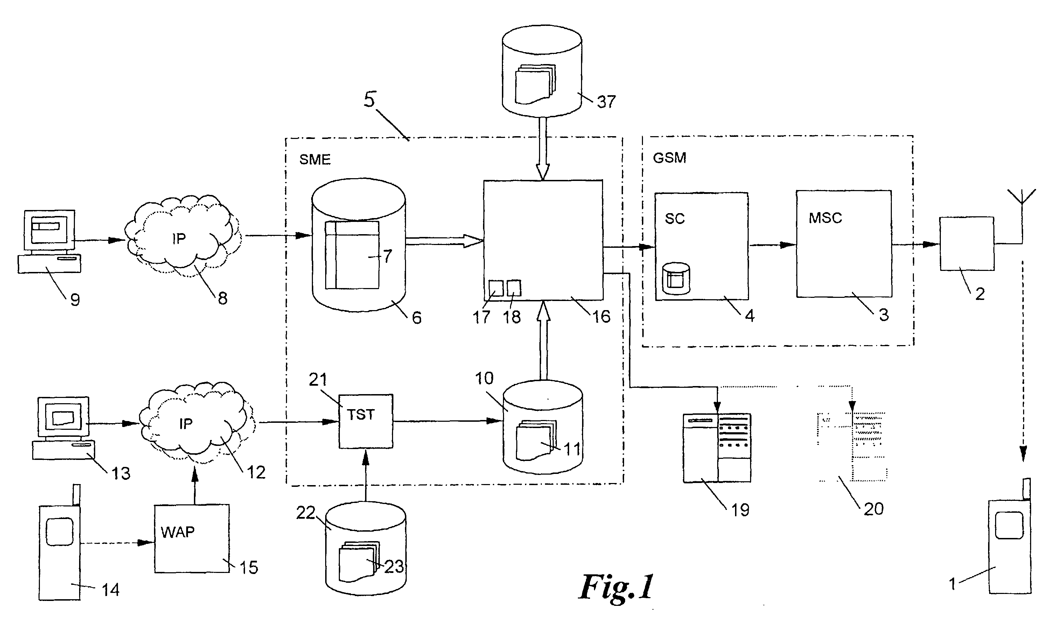

Zunächst wird auf Fig. 1 als Blockschaltbild der erfindungsgemäßen Vorrichtung in Verbindung mit peripheren Komponenten Bezug genommen. Wie in der Technik bekannt, können die dargestellten Komponenten sowohl mittels Hardware realisiert als auch mittels Software implementiert werden.

Gemäß Fig. 1 stehen Mobiltelephone 1 über Zellen-Sendeempfänger 2 (nur einer dargestellt) mit einer Vermittlungsstelle (Mobile Services Switching Center MSC) 3 eines GSM-Mobiltelephonnetzes in Verbindung. Die Vermittlungsstelle 3 steht ihrerseits mit einer Dienstzentrale (Service Center SC) 4 in Verbindung, welche entsprechend der GSM-Spezifikation SMS-Nachrichten von einer beliebigen SMS-Nachrichtenquelle (Short Message Entity SME) empfängt, temporär speichert, die Verfügbarkeit der Empfänger überprüft und mit Hilfe der Vermittlungsstelle 3 an die Empfänger weiterleitet, hier die Mobiltelephone 1.

Eine SMS-Nachrichtenquelle kann ein SMS-sendendes Mobiltelephon sein, ein leitungsgebundenes Telephon mit entsprechender Tastwahleingabe, oder wie im vorliegenden Fall eine speziell gewidmete SMS-Nachrichtenquelle 5 zum automatischen Generieren und Versenden von SMS-Nachrichten.

Die SMS-Nachrichtenquelle 5 umfaßt eine erste Datenbank 6. Die erste Datenbank 6 enthält einen Vorrat an versendbaren SMS-Nachrichten 7, denen jeweils auch Kontoinkremente zugeordnet sind, deren Zweck später noch erläutert wird. Die erste Datenbank 6 ist über einen Internetzugang 8 von Arbeitsstationen 9 her mit ebendiesen SMS-Nachrichten und Kontoinkrementen speisbar. Die Arbeitsstationen 9 sind beispielsweise handelsübliche PCs mit Internet-Browsersoftware und bei Firmenkunden aufgestellt, welche z.B. Werbe-SMS in die Datenbank 6 einspeisen.

Die SMS-Nachrichtenquelle 5 weist ferner eine zweite Datenbank 10 auf. Die zweite Datenbank 10 nimmt SMS-Akzeptanzprofile 11 auf, die jeweils einer Mobiltelephonadresse und damit einem Mobiltelephon 1 bzw. einem Mobiltelephonkunden zugeordnet sind. Die Mobiltelephonadresse ist beispielsweise die Telephonnummer des Mobiltelephones 1.

Jedes SMS-Akzeptanzprofil 11 ist ein Datensatz, welcher - über die Mobiltelephonadresse referenziert - einem Mobiltelephonkunden zugeordnet ist und Angaben darüber enthält, welche Art von SMS-Nachrichten der Benutzer akzeptiert, und bevorzugt auch wann, wie und/oder mit welchen Kontoinkrementen.

Die zweite Datenbank 10 ist über einen Internetzugang 12 von Arbeitsstationen 13 her mit SMS-Akzeptanzprofilen speisbar. Die Arbeitsstationen 13 können handelsübliche PCs mit Internet-Browsersoftware sein, welche am Ort von Konsumenten aufgestellt sind.

Es versteht sich, daß die Internetzugänge 8 und 12 auch durch ein einziges Internetgateway gebildet sein können, welches der SMS-Nachrichtenquelle 5 zugeteilt ist.

Anstelle über Arbeitsstationen 13 könnte die zweite Datenbank 10 auch von Mobiltelephonen 14 über ein entsprechendes Protokoll, z.B. das Wireless Application Protocol (WAP), mit SMS-Akzeptanzprofilen gespeist werden. Die Mobiltelephone 14 können auch dieselben sein wie die Mobiltelephone 1, auf welchen die SMS-Nachrichten empfangen werden.

Die Datenbanken 6 und/oder 10 können anstelle über Internetzugänge alternativ auch über alle anderen bekannten Arten von Fernzugängen gespeist werden, z.B. über das Telephonnetz durch Tastwahleingaben des Benutzers nach entsprechender Aufforderung durch ein Sprachmenüsystem (Voice Response Unit, VRU); mittels Sprachsteuerung/Spracherkennung anstelle von Tastwahleingaben; über Einwahlknoten in Form von Bulletin Board Services (BBS); über das Mobiltelephonnetz mittels SMS-Nachrichten in dieser Richtung, d.h. vom Benutzer zur Vorrichtung, usw.

Die SMS-Nachrichtenquelle 5 weist einen Taskplaner 16 auf, der sowohl an die erste Datenbank 6 als auch an die zweite Datenbank 10 angeschlossen ist. Der Taskplaner 16 enthält einen Zeitgeber 17 und/oder einen Zufallsgenerator 18, arbeitet unter dessen/deren Steuerung die einzelnen SMS-Akzeptanzprofile 11 in der zweiten Datenbank 10 ab und liest den SMS-Akzeptanzprofilen 11 entsprechende SMS-Nachrichten 7 aus der ersten Datenbank 6 aus. Der Taskplaner 16 sendet jede derart ausgelesene SMS-Nachricht 7 zusammen mit der im jeweiligen SMS-Akzeptanzprofil 11 angegebenen Mobiltelephonadresse an die Dienstzentrale 4 des GSM-Mobiltelephonnetzes. Gleichzeitig sendet der Taskplaner 16 das dieser SMS-Nachricht 7 zugeordnete Kontoinkrement zusammen mit der genannten Mobiltelephonadresse an eine Verrechnungsanlage 19, in welcher den Mobiltelephonadressen zugeordnete Konten der Mobiltelephonnutzer geführt sind. Die Verrechnungsanlage 19 schreibt das erhaltene Kontoinkrement dem Konto der jeweiligen Mobiltelephonadresse gut.

Die Verrechnungsanlage 19 kann die Kundenverrechnungsanlage des Mobiltelephonnetzbetreibers sein, die Kontoführungsanlage eines Geldinstitutes, einer Kreditkartenorganisation, einer Internetbank für "Cybercash", usw.

Auch mehrere Verrechnungsanlagen 19, 20 können gleichzeitig angesteuert werden, beispielsweise um ein dem Kontoinkrement entsprechendes Kontodekrement von einem Konto eines Werbe-SMS einspeisenden Firmenkunden abzubuchen, usw.

Das Kontoinkrement kann die Bedeutung eines Geldwertes, Rabattes, einer Telephongesprächszeit, eines Dienstleistungsäquivalentes usw. haben.

Um zu verhindern, daß ein Benutzer ein zu umfangreiches SMS-Akzeptanzprofil einspeist, um Kontoinkremente zu erhalten, ohne die erforderliche Qualifikation für den Empfang bestimmter SMS-Nachrichten zu besitzen (was z.B. bei Werbe-SMS zu Werbestreuverlusten führen würde), enthält der Internetzugang zur zweiten Datenbank 10 eine Überprüfungsstufe 21. Die Überprüfungsstufe 21 ist an eine dritte Datenbank 22 angeschlossen, in welcher SMS-Autorisierungsprofile für jeweils zugeordnete Mobiltelephonadressen gespeichert sind.

Die SMS-Autorisierungsprofile 23 können z.B. aus einer Kundenprofil-Datenbank des Mobiltelephonnetzes abgeleitet sein oder bestehen. Die Überprüfungsstufe 21 vergleicht jedes über den Internetzugang 12 eingegebene SMS-Akzeptanzprofil 11 mit dem entsprechenden, über die jeweilige Mobiltelephonadresse referenzierten SMS-Autorisierungsprofil 23. Wenn das gewünschte SMS-Akzeptanzprofil 11 innerhalb der Grenzen, Beschränkungen bzw. Kriterien des zugeordneten SMS-Autorisierungsprofiles 23 liegt, wird seine Einspeisung in die zweite Datenbank 10 bzw. Speicherung darin freigegeben.

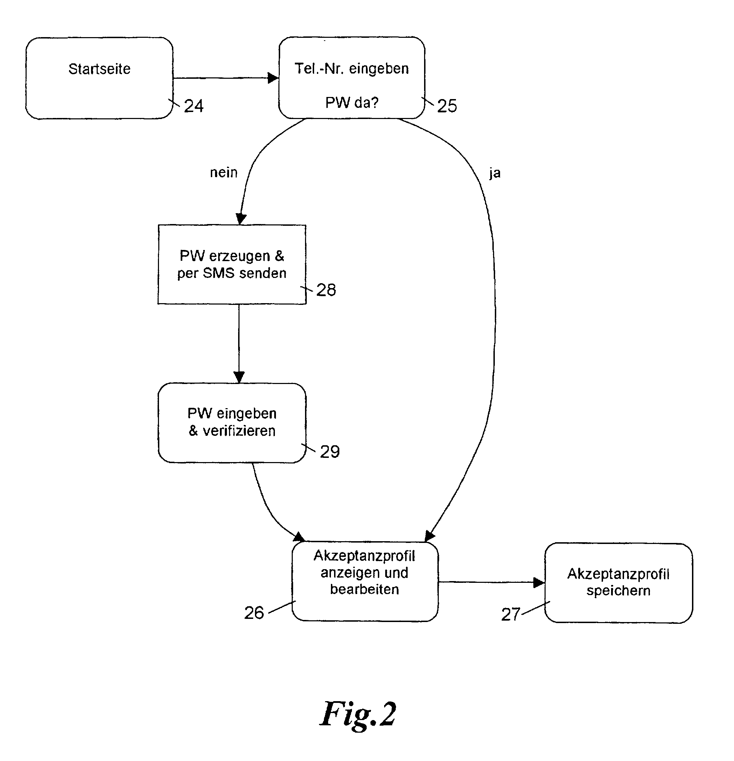

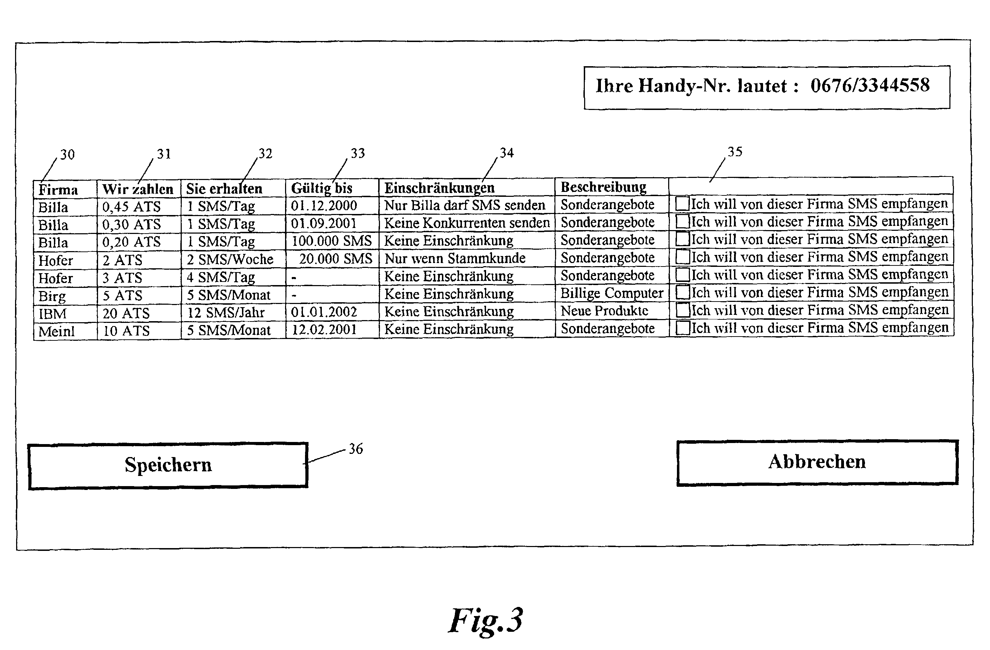

Fig. 2 zeigt das Flußdiagramm eines besonders angepaßten Verfahrens zur Freigabe des Internetzuganges 12 zur zweiten Datenbank 10. Ausgehend von einem ersten Block 24, in dem einem Benutzer an einer Arbeitsstation 13 eine Begrüßungs- und Informationsseite angezeigt wird, gibt der Benutzer in einem Block 25 seine Mobiltelephonnummer als Mobiltelephonadresse und optional ein Paßwort ein. Wenn das Paßwort vorhanden und richtig ist, wird zu einem Block 26 verzweigt, in welchem das SMS-Akzeptanzprofil angezeigt wird und vom Benutzer bearbeitet werden kann, wie an Hand von Fig. 3 noch erläutert wird. Anschließend wird in einem Block 27 das SMS-Akzeptanzprofil in der zweiten Datenbank 10 gespeichert.

Wenn kein Paßwort vorhanden ist, wird in einem Block 28 ein neues Paßwort erzeugt und im Textkörper einer SMS-Nachricht an die vom Benutzer im Block 25 angegebene Mobiltelephonadresse verschickt, u.zw. unter Zuhilfenahme der Dienstzentrale 4 und der Vermittlungsstelle 3. Der Benutzer wartet auf den Empfang der SMS-Nachricht an seinem Mobiltelephon 1, liest das erhaltene Paßwort ab und gibt es im nächsten Block 29 zwecks Anmeldung im System (Login) ein. Wenn das im Block 29 eingegebene Paßwort richtig ist, wird wieder zu Block 26 fortgeschritten, und so fort.

Die im Block 26 dargebotene Bildschirmmaske zur Bearbeitung eines SMS-Akzeptanzprofiles 11 ist in Fig. 3 dargestellt. Die Bildschirmmaske kann als HTML-Seite gestaltet sein und zeigt eine Übersichtstabelle der Kategorien an versendbaren SMS-Nachrichten 7 der ersten Datenbank 6, u.zw. kategorisiert nach Anbieterfirmen (Spalte 30), zusammen mit den zugeordneten Kontoinkrementen (Spalte 31), der vorbestimmten statistischen Frequenz für den Taskplaner 16 (Spalte 32) und zusätzlichen Auswahlregeln (Spalten 33, 34). In der bearbeitbaren Spalte 35 wird die Auswahl vom Benutzer getroffen, und Feld 36 der Eingabemaske speichert die Maskendaten als SMS-Akzeptanzprofil 11 unter der jeweiligen Mobiltelephonadresse in der zweiten Datenbank 10 ab.

Zurückkommend auf Fig. 1 kann der Taskplaner 16 auch noch optional an ein Ortsregister 37 des Mobiltelephonnetzes angeschlossen sein. Das Ortsregister 37 enthält aktualisierte Ortsdaten der gerade im Netz angemeldeten Mobiltelephonadressen, d.h. im Betrieb befindlichen Mobiltelephone 1, und der Taskplaner 16 kann die SMS-Nachrichten 7 auch unter Berücksichtigung des Aufenthaltsortes eines Mobiltelephones 1 auswählen. In GSM-Netzen wird das Ortsregister 37 durch das bekannte Zusammenspiel von HLR (Home Location Register) und VLR (Visitor Location Register) implementiert.

Es versteht sich, daß alle dargestellten Komponenten des Systems sowohl in einer Hardwarevariante realisierbar als auch mittels Softwarekomponenten implementierbar sind. Auch eine Mischung aus Hardware- und Softwarekomponenten ist möglich. Demgemäß kann das Blockschaltbild von Fig. 1 auch als Objekt- oder Komponentendiagramm 1 eines entsprechenden Computerprogrammes betrachtet werden, wobei die einzelnen Zeichnungselemente für die Computerprogrammelemente stehen, welche die jeweils oben erörterten Funktionalitäten implementieren.

## Patentansprüche

1. Vorrichtung zum automatischen Generieren und Versenden von SMS-Nachrichten an Mobiltelephone (1), die in einem Mobiltelephonnetz jeweils durch ihre Mobiltelephonadresse identifiziert sind, wobei das Mobiltelephonnetz eine SMS-Dienstzentrale (4) aufweist, und wobei den Mobiltelephonadressen Konten in einer Verrechnungsanlage (19, 20) zugeordnet sind, mit
einer ersten Datenbank (6), die einen Vorrat an versendbaren SMS-Nachrichten (7) bereitstellt,
einer zweiten Datenbank (10), welche SMS-Akzeptanzprofile (11) für jeweils zugeordnete Mobiltelephonadressen aufnimmt und über einen Fernzugang (12) speisbar ist, und
einem Taskplaner (16), der unter Steuerung eines Zeitgebers (17) und/oder Zufallsgenerators (18) die SMS-Akzeptanzprofile (11) in der zweiten Datenbank (10) abarbeitet und den SMS-Akzeptanzprofilen entsprechende SMS-Nachrichten (7) aus der ersten Datenbank (6) ausliest und jede ausgelesene SMS-Nachricht (7) zusammen mit der im jeweiligen SMS-Akzeptanzprofil (11) angegebenen Mobiltelephonadresse an die SMS-Dienstzentrale (4) sendet,
**dadurch gekennzeichnet, daß** den SMS-Nachrichten (7) in der ersten Datenbank (6) jeweils Kontoinkremente zugeordnet sind, und
daß der Taskplaner (16) das einer ausgelesenen SMS-Nachricht (7) zugeordnete Kontoinkrement zusammen mit der genannten Mobiltelephonadresse an die Verrechnungsanlage (19, 20) sendet.

2. Vorrichtung nach Anspruch 1, **dadurch gekennzeichnet, daß** der Fernzugang (12) ein Internetzugang ist.

3. Vorrichtung nach Anspruch 1 oder 2, **gekennzeichnet durch** eine dritte Datenbank (22), in welcher SMS-Autorisierungsprofile (23) für jeweils zugeordnete Mobiltelephonadressen gespeichert sind,
wobei der die zweite Datenbank (10) speisende Fernzugang (12) mit einer Überprüfungsstufe (21) in Verbindung steht, welche ein eingespeistes SMS-Akzeptanzprofil (11) anhand des - über die jeweilige Mobiltelephonadresse referenzierten - SMS-Autorisierungsprofiles (23) auf Autorisierung überprüft.

4. Vorrichtung nach Anspruch 3, **dadurch gekennzeichnet, daß** die SMS-Autorisierungsprofile (23) aus einer Kundenprofil-Datenbank des Mobiltelephonnetzes abgeleitet sind.

5. Vorrichtung nach einem der Ansprüche 1 bis 4, **dadurch gekennzeichnet, daß** der Taskplaner (16) an ein Ortsregister (37) des Mobiltelephonnetzes angeschlossen ist, welches aktualisierte Ortsdaten der im Netz gerade angemeldeten Mobiltelephonadressen enthält, und die SMS-Nachrichten (7) auch anhand dieser Ortsdaten ausliest.

6. Vorrichtung nach einem der Ansprüche 1 bis 5, **dadurch gekennzeichnet, daß** auch die erste Datenbank (6) über einen Fernzugang, bevorzugt einen Internetzugang (8), speisbar ist.

7. Verfahren zum selektiven Freigeben des einspeisenden Internetzuganges (12) zur zweiten Datenbank (10) der Vorrichtung nach einem der Ansprüche 2 bis 6, **gekennzeichnet durch** die Schritte:
a) Empfangen (25) einer Mobiltelephonadresse über das Internet und Speichern derselben,
b) Erzeugen (28) und Speichern eines der Mobiltelephonadresse zugeordneten Paßwortes und Senden desselben, zusammen mit der Mobiltelephonadresse, an eine SMS-Dienstzentrale (4) eines Mobiltelephonnetzes,
c) Empfangen (29) eines Paßwortes über das Internet,
d) Vergleichen (29) des gesendeten Paßwortes mit dem empfangenen Paßwort und Freigeben des einspeisenden Internetzuganges im Falle der Übereinstimmung.

8. Computerprogramm zum automatischen Generieren und Versenden von SMS-Nachrichten an Mobiltelephone (1), die in einem Mobiltelephonnetz jeweils durch ihre Mobiltelephonadresse identifiziert sind, wobei das Mobiltelephonnetz eine SMS-Dienstzentrale (4) enthält, und wobei den Mobiltelephonadressen Konten in einer Verrechnungsanlage (19, 20) zugeordnet sind, mit
einem Computerprogrammelement, implementierend eine erste Datenbank (6), die einen Vorrat an versendbaren SMS-Nachrichten (7) bereitstellt,
einem Computerprogrammelement, implementierend eine zweite Datenbank (10), welche SMS-Akzeptanzprofile (11) für jeweils zugeordnete Mobiltelephonadressen aufnimmt und über einen Fernzugang (12) speisbar ist, und
einem Computerprogrammelement, implementierend einen Taskplaner (16), der unter Steuerung eines Zeitgebers (17) und/oder Zufallsgenerators (18) die SMS-Akzeptanzprofile (11) in der zweiten Datenbank (10) abarbeitet und den SMS-Akzeptanzprofilen entsprechende SMS-Nachrichten (7) aus der ersten Datenbank (6) ausliest und jede ausgelesene SMS-Nachricht (7) zusammen mit der im jeweiligen SMS-Akzeptanzprofil (11) angegebenen Mobiltelephonadresse an die SMS-Dienstzentrale (4) sendet,
**dadurch gekennzeichnet,**
**daß** den SMS-Nachrichten (7) in der ersten Datenbank (6) jeweils Kontoinkremente zugeordnet sind, und
**daß** der Taskplaner (16) das einer ausgelesenen SMS-Nachricht (7) zugeordnete Kontoinkrement zusammen mit der genannten Mobiltelephonadresse an die Verrechnungsanlage (19, 20) sendet.

9. Computerprogramm nach Anspruch 8, **dadurch gekennzeichnet, daß** der Fernzugang (12) als Internetzugang implementiert ist.

10. Computerprogramm nach Anspruch 8 oder 9, **gekennzeichnet durch**
ein Computerprogrammelement, implementierend eine dritte Datenbank (22), in welcher SMS-Autorisierungsprofile (23) für jeweils zugeordnete Mobiltelephonadressen gespeichert sind,
wobei der die zweite Datenbank (10) speisende Fernzugang (12) mit einer Überprüfungsstufe (21) in Verbindung steht, welche ein eingespeistes SMS-Akzeptanzprofil (11) anhand des - über die jeweilige Mobiltelephonadresse referenzierten - SMS-Autorisierungsprofiles (23) auf Autorisierung überprüft.

11. Computerprogramm nach Anspruch 10, **dadurch gekennzeichnet, daß** die SMS-Autorisierungsprofile (23) aus einer Kundenprofil-Datenbank des Mobiltelephonnetzes abgeleitet sind.

12. Computerprogramm nach einem der Ansprüche 8 bis 11, **dadurch gekennzeichnet, daß** das den Taskplaner (16) implementierende Computerprogrammelement an ein Ortsregister (37) des Mobiltelephonnetzes angeschlossen ist, welches aktualisierte Ortsdaten der im Netz gerade angemeldeten Mobiltelephonadressen enthält, und die SMS-Nachrichten (7) auch anhand dieser Ortsdaten ausliest.

13. Computerprogramm nach einem der Ansprüche 8 bis 12, **dadurch gekennzeichnet, daß** auch das die erste Datenbank (6) implementierende Computerprogrammelement über einen Fernzugang, bevorzugt einen Internetzugang speisbar ist.

14. Computerprogramm nach einem der Ansprüche 8 bis 13, **gekennzeichnet durch** ein Computerprogrammelement, implementierend die Schritte:
a) Empfangen (25) einer Mobiltelephonadresse über das Internet und Speichern derselben,
b) Erzeugen (28) und Speichern eines der Mobiltelephonadresse zugeordneten Paßwortes und Senden desselben, zusammen mit der Mobiltelephonadresse, an eine SMS-Dienstzentrale eines Mobiltelephonnetzes,
c) Empfangen (29) eines Paßwortes über das Internet,
d) Vergleichen (29) des gesendeten Paßwortes mit dem empfangenen Paßwort und Freigeben des einspeisenden Internetzuganges im Falle der Übereinstimmung.

## Claims

1. Device to automatically generate and send SMS messages to mobile phones (1) that are identified in a mobile phone network by their respective mobile phone address, whereby the mobile phone network has an SMS service centre (4), and whereby accounts are allocated to the mobile phone addresses in a settlement facility (19, 20), with
a first database (6), which provides a supply of ready-to-send SMS messages (7),
a second database (10), which records SMS acceptance profiles (11) for the respective mobile phone addresses allocated and which can be fed via a remote access (12), and
a task planner (16) that, controlled by a timing device (17) and /or a random generator (18), processes the SMS acceptance profiles (11) in the second database (10) and reads out the SMS messages (7) that correspond to the SMS acceptance profiles from the first database (6) and sends each SMS message (7) that has been read out, together with the mobile phone address given in the respective SMS acceptance profile (11), to the SMS service centre (4),
**characterised in that** account increments are allocated to the respective SMS messages (7) in the first database (6), and
**in that** the task planner (16) sends the account increment allocated to an SMS message (7) that has been read out, together with the specified mobile phone address, to the settlement facility (19, 20).

2. Device according to claim 1, **characterised in that** the remote access (12) is an Internet access.

3. Device according to claim 1 or 2, **characterised in that** there is a third database (22), in which SMS authorisation profiles (23) for the respective mobile phone addresses allocated are stored,
whereby the remote access (12) feeding the second database (10) is linked to a check stage (21), which uses the SMS authorisation profile (23) - referenced via the mobile phone address in question - to check an uploaded SMS acceptance profile (11) for authorisation.

4. Device according to claim 3, **characterised in that** the SMS authorisation profiles (23) are derived from a customer profile database of the mobile phone network.

5. Device according to one of the claims 1 to 4, **characterised in that** the task planner (16) is connected to a local register (37) of the mobile phone network, which contains updated local data of the mobile phone addresses registered in the network at that time, and which also outputs the SMS messages (7) using this local data.

6. Device according to one of the claims 1 to 5, **characterised in that** the first database (6) can also be fed via a remote access, preferably an Internet access (8).

7. Method of selectively enabling the uploading Internet access (12) to the second database (10) of the device according to one of the claims 2 to 6, **characterised by** the following steps:
a) reception (25) of a mobile phone address via the Internet and storage of the same.
b) generation (28) and storage of a password allocated to the mobile phone address and sending of the same, together with the mobile phone address, to an SMS service centre (4) in a mobile phone network,
c) reception (29) of a password via the Internet,
d) comparison of the password sent with the password received and enabling of the uploading Internet access should the two correspond.

8. Computer program which automatically generates and sends SMS messages to mobile phones (1), that can each be identified in the mobile phone network by means of their mobile phone address, whereby the mobile phone network contains an SMS service centre (4), and whereby accounts are allocated to the mobile phone addresses in a settlement facility (19, 20), with
a computer program element, implementing a first database (6), which provides a supply of ready-to-send SMS messages (7),
a computer program element, implementing a second database (10), which loads SMS acceptance profiles (11) for allocated mobile phone addresses and can be fed via a remote access (12), and
a computer program element, implementing a task planner (16) that is controlled by a timing device (17) and/or a random generator (18), processes the SMS acceptance profiles (11) in the second database (10) and selects the SMS messages (7) that correspond to the SMS acceptance profiles from the first database (6) and sends each SMS message (7) that has been read out, together with the mobile phone address given in the respective SMS acceptance profile, to the SMS service centre (4),
**characterised in that**
account increments are allocated to the respective SMS messages (7) in the first database (6), and
**in that** the task planner (16) sends the account increment allocated to an SMS message (7) that has been read out, together with the specified mobile phone address, to the settlement facility (19, 20).

9. Computer program according to claim 8, **characterised in that** the remote access (12) is implemented as an Internet access.

10. Computer program according to claim 8 or 9, **characterised by**
a computer program element implementing a third database (22), in which SMS authorisation profiles (23) for the respective mobile phone addresses allocated, are stored,
whereby the remote access (12) feeding the second database (10) is linked to a check stage (21), which uses the SMS authorisation profile (23) - referenced via the mobile phone address in question - to check an uploaded SMS acceptance profile (11) for authorisation.

11. Computer program according to claim 10, **characterised in that** the SMS authorisation profiles (23) are derived from a customer profile database in the mobile phone network.

12. Computer program according to one of the claim 8 to 11, **characterised in that** the computer program element implementing the task planner (16) is connected to a local register (37) in the mobile phone network, which contains updated local data of the mobile phone addresses that are registered in the network at that time, and which also outputs the SMS messages (7) using this local data.

13. Computer program according to one of the claims 8 to 12, **characterised in that** the computer element implementing the first database (6) can also be fed via a remote access, preferably an Internet access.

14. Computer program according to one of the claims 8 to 13, **characterised in that** it has a computer program element that implements the steps:
a) reception (25) of a mobile phone address via the Internet and storage of the same,
b) generation (28) and storage of a password allocated to the mobile phone address and sending of the same, together with the mobile phone address, to an SMS service centre (4) in a mobile phone network,
c) reception (29) of a password via the Internet,
d) comparison of the password sent with the password received and enabling of the uploading Internet access should the two correspond.

## Revendications

1. Dispositif pour générer et transmettre automatiquement des messages SMS vers des téléphones mobiles (1) qui sont respectivement identifiés dans un réseau de téléphonie mobile par leur adresse de téléphone mobile, le réseau de téléphonie mobile présentant une centrale de services SMS et les adresses de téléphone mobile étant coordonnées à des comptes dans une installation de calcul (19, 20), comprenant
une première banque de données (6) qui met à disposition un stock de messages SMS (7) pouvant être envoyés,
une deuxième banque de données (10) qui enregistre les profils d'acceptation (11) de SMS pour des adresses de téléphone mobile qui y sont chaque fois coordonnées et qui peut être alimentée par un accès à distance, et
un planificateur de tâches (16) qui, piloté par une horloge (17) et/ou un générateur aléatoire (18), utilise les profils d'acceptation (11) de SMS dans la deuxième banque de données (10) et lit les messages SMS (7) correspondant aux profils d'acceptation de SMS dans la première banque de données (6) et envoie chaque message SMS (7) lu conjointement avec l'adresse de téléphone mobile indiquée dans le profil d'acceptation de SMS concerné à la centrale de services SMS (4),
**caractérisé en ce que** des incréments de compte sont respectivement coordonnés aux messages SMS (7) dans la première banque de données (6) et
**en ce que** le planificateur de tâches (16) envoie l'incrément de compte coordonné au message SMS (7) lu en même temps que ladite adresse de téléphone mobile à la centrale de calcul (19, 20).

2. Dispositif selon la revendication 1, **caractérisé en ce que** l'accès à distance (12) est un accès à Internet.

3. Dispositif selon la revendication 1 ou 2, **caractérisé par** une troisième banque de données (22) dans laquelle
l'accès à distance (12) alimentant la deuxième banque de données (10) étant en communication avec une instance de vérification (21) qui vérifie du point de vue autorisation un profil d'acceptation (11) de SMS introduit sur la base du profil d'autorisation (23) de SMS référencé par le truchement de l'adresse de téléphone mobile concernée.

4. Dispositif selon la revendication 3, **caractérisé en ce que** les profils d'autorisation (23) de SMS sont dérivés d'une banque de données sur les profils des clients du réseau de téléphonie mobile.

5. Dispositif selon une des revendications 1 à 4, **caractérisé en ce que** le planificateur de tâches (16) est raccordé à un registre local (37) du réseau de téléphonie mobile, qui contient des données locales actualisées sur les adresses de téléphone mobile qui viennent d'être demandées dans le réseau et lit également les messages SMS (7) sur la base de ces données locales.

6. Dispositif selon une des revendications 1 à 5, **caractérisé en ce que** la première banque de données (6) peut également être alimentée par un accès à distance, de préférence un accès à Internet (8).

7. Procédé pour valider sélectivement l'accès à Internet (12) pour l'alimentation de la deuxième banque de données (10) du dispositif selon une des revendications 2 à 6, **caractérisé par** les étapes consistant à
a) recevoir (25) une adresse de téléphone mobile par internet et stocker celle-ci,
b) produire (28) et stocker un mot de passe associé à une adresse de téléphone mobile et à l'envoyer en même temps que l'adresse de téléphone mobile à une centrale de services SMS (4) d'un réseau de téléphonie mobile,
c) recevoir (29) un mot de passe par Internet,
d) comparer (29) le mot de passe envoyé avec le mot de passe reçu et valider l'accès à Internet pour l'alimentation en cas de concordance.

8. Programme d'ordinateur pour générer et envoyer automatiquement des messages SMS à des téléphones mobiles (1) qui sont respectivement identifiés dans un réseau de téléphonie mobile par leur adresse de téléphone mobile, le réseau de téléphonie mobile comportant une centrale de services SMS, et des comptes dans une installation de calcul (19, 20) étant coordonnés aux adresses de téléphone mobiles, comprenant
un élément de programme d'ordinateur, mettant en oeuvre une première banque de données (6) qui met à disposition un stock de messages SMS (7) pouvant être envoyés,
un élément de programme d'ordinateur, mettant en oeuvre une deuxième banque de données (10) qui enregistre des profils d'acceptation (11) de SMS pour les adresses de téléphone mobile qui y sont respectivement coordonnées et qui peut être alimentée par un accès à distance (12), et
un élément de programme d'ordinateur mettant en oeuvre un planificateur de tâches (16 qui, piloté par une horloge (17) et/ou un générateur aléatoire (18), utilise les profils d'acceptation (11) de SMS dans la deuxième banque de données et lit les messages SMS (7) correspondant aux profils d'acceptation de SMS dans la première banque de données (6) et envoie chaque message SMS (7) lu en même temps que l'adresse de téléphone mobile indiquée dans le profil d'acceptation de SMS concerné à la centrale de services SMS (4),
**caractérisé en ce que** des incréments de compte sont respectivement coordonnés aux messages SMS (7) dans la première banque de données (6) et
**en ce que** le planificateur de tâches (16) envoie l'incrément de compte coordonné au message SMS (7) lu en même temps que ladite adresse de téléphone mobile à la centrale de calcul (19, 20).

9. Programme d'ordinateur selon la revendication 8, **caractérisé en ce que** l'accès à distance (12) est mis en oeuvre comme accès à Internet.

10. Programme d'ordinateur selon la revendication 8 ou 9, **caractérisé par**
un élément de programme d'ordinateur, mettant en oeuvre une troisième banque de données (22) dans laquelle des profils d'autorisation (23) de SMS sont stockés pour les adresses de téléphone mobile respectivement y afférentes,
l'accès à distance (12) alimentant la deuxième banque de données (10) étant en communication avec une instance de vérification (21) qui vérifie du point de vue autorisation un profil d'acceptation (11) de SMS introduit sur la base du profil d'autorisation (23) de SMS référencé par le truchement de l'adresse de téléphone mobile concernée.

11. Programme d'ordinateur selon la revendication 10, **caractérisé en ce que** les profils d'autorisation (23) de SMS sont dérivés d'une banque de données sur les profils des clients du réseau de téléphonie mobile.

12. Programme d'ordinateur selon une des revendications 8 à 11, **caractérisé en ce que** l'élément de programme d'ordinateur mettant en oeuvre le planificateur de tâches est raccordé à un registre local (37) du réseau de téléphonie mobile, qui contient des données locales actualisées sur les adresses de téléphone mobile qui viennent d'être demandées dans le réseau et lit également les messages SMS (7) sur la base de ces données locales.

13. Programme d'ordinateur selon une des revendications 8 à 12, **caractérisé en ce que** l'élément de programme d'ordinateur mettant en oeuvre la première banque de données (6) peut également être alimenté par un accès à distance, de préférence un accès à Internet (8).

14. Programme d'ordinateur selon une des revendications 8 à 13, **caractérisé par** un élément de programme d'ordinateur mettant en oeuvre les étapes consistant à:
a) recevoir (25) une adresse de téléphone mobile par Internet et stocker celle-ci,
b) produire (28) et stocker un mot de passe associé à une adresse de téléphone mobile et à l'envoyer en même temps que l'adresse de téléphone mobile à une centrale de services SMS (4) d'un réseau de téléphonie mobile,
c) recevoir (29) un mot de passe par Internet,
d) comparer (29) le mot de passe envoyé avec le mot de passe reçu et valider l'accès à Internet pour l'alimentation en cas de concordance.
